# EUROPÄISCHE PATENTSCHRIFT

(11) **EP 1 700 175 B1**
(45) Veröffentlichungstag und Bekanntmachung des Hinweises auf die Patenterteilung: **25.05.2011**
(21) Anmeldenummer: 04797845.7
(22) Anmeldetag: 12.11.2004
(51) Int. Cl.: G05B 19/425, G05B 19/4093, B25J 9/16

(54) **VORRICHTUNG UND VERFAHREN ZUM PROGRAMMIEREN EINES INDUSTRIEROBOTERS**
DEVICE AND METHOD FOR PROGRAMMING AN INDUSTRIAL ROBOT
DISPOSITIF ET PROCEDE DE PROGRAMMATION D'UN ROBOT INDUSTRIEL

(30) Priorität: 22.11.2003 DE 10354642
(43) Veröffentlichungstag der Anmeldung: 13.09.2006
(73) Patentinhaber: Bayerische Motoren Werke Aktiengesellschaft, 80809 München (DE)
(72) Erfinder: NEUBAUER, Hans-Joachim, 80992 München (DE); SANDNER, Harald, 93189 Reichenbach (DE)
(86) Internationale Anmeldenummer: PCT/EP2004/012829
(87) Internationale Veröffentlichungsnummer: WO 2005/050335

(56) Entgegenhaltungen:
- EP-A- 1 304 194
- EP-A- 1 310 843
- WO-A-94/06249
- WO-A-03/019423
- JP-A- 2001 150 373
- US-A- 4 987 527

## Beschreibung

Die vorliegende Erfindung bezieht sich auf eine Vorrichtung und ein Verfahren zum Programmieren eines Industrieroboters. Insbesondere soll mit dem Programm eine 3-dimensionale Bewegungsbahn in bezug auf ein zu bearbeitendes 3-dimensionales Objekt erzeugt und gespeichert werden.

Roboterprogramme können offline und online erstellt werden.

Bei der Offline-Programmierung ist es bekannt, eine sog. Simulationssoftware wie folgt einzusetzen: Die Geometrie und Kinematik des Roboters, der Arbeitsplatz des Roboters und das Objekt, beispielsweise eine Fahrzeugkarosse werden als mathematisches Modell bzw. als CAD-Daten in einem Rechner gespeichert und daraus mittels eines Grafikprogramms eine 2-dimensionale Abbildung auf einem Bildschirm gewonnen. Hierfür ist die Existenz eines realen Objekts oder sogar eines Roboters nicht notwendig. Die CAD-Daten bzw. das mathematische Modell beinhalten alle kinematischen Funktionalitäten, die zum Beispiel ein Prototyp einer realen Karosse und ein Roboter in einer Roboteranlage aufweisen. Mit Hilfe dieser Simulationssoftware lassen sich auch sämtliche Bewegungsbahnen des Roboters auf dem Bildschirm wiedergeben. Sie können gespeichert und anschließend mittels eines realen Roboters an einem realen Objekt praktiziert werden.

Die Bedienung der Simulationssoftware erfordert hohen Schulungsaufwand und permanentes Training, um einen effizienten Einsatz zu erreichen. Ein Beispiel für eine derartige Simulationssoftware ist unter der Bezeichnung "eM-Workptace" der Fa. Tecnomatix GmbH im Handel. Allerdings besteht der Vorteil, dass ein konkretes Objekt nicht hergestellt werden muss.

Bei der Online Programmierung, auch reale Programmierung genannt, ist ein reales Objekt, z.B. eine Fahrzeugkarosse und ein realer Roboter vorhanden. Für die Bahnsteuerung ist ein Schaltschrank vorgesehen. Nur bei baulich vorhandenen Komponenten kann die Programmierung durchgeführt werden. Durch Bedienung eines Programmierhandgerätes kann der Roboter an verschiedenen Punkten im Raum positioniert werden. Diese Punkte erhalten Eigenschaften bezüglich ihres Anfahrens (linear, zirkular etc. ) und eine Definition bezüglich ihrer Orientierung im Raum.

Die gespeicherten Punkte ergeben in ihrer Gesamtheit auch hier ein Roboterprogramm. Dieses stellt jeden Arbeitsvorgang des Roboters dar und kann beliebig oft reproduziert werden. Die Bedienung eines Programmierhandgeräts ist von erfahrenen Roboterprogrammieren schnell beherrschbar und auch für einen unerfahrenen Bediener schnell erlernbar. Diesem Vorteil steht der Nachteil gegenüber, das konkrete Objekt herstellen zu müssen, was Zeit und Geld kostet.

Das Dokument US 4,987,527 A1 offenbart ein Verfahren zum Programmieren eines Industrieroboters unter Verwendung eines Simulationsprogramms, bei dem Steuerbefehle aufgegeben und an das Simulationsprogramm übertragen werden und diese Befehle von dem Simulationsprogramm auf der Basis von Daten des Roboters als Bewegungs- und/oder Bearbeitungsvorgänge des Roboters auf einer Bildfläche visualisiert werden und ein zu behandelndes Objekt ebenfalls auf der Bildfläche dargestellt wird.

Auch das Dokument EP 1 304 194 A2 offenbart eine Vorrichtung und ein Verfahren zur Simulation der Bewegung eines aus einem Industrieroboter und einem daran gekoppelten Peripheriegerät gebildeten Systems.

Der Erfindung liegt die Aufgabe zu Grunde, ein Verfahren und eine Vorrichtung zu schaffen, mit denen der Programmierprozess schnell und einfach durchführbar ist.

Diese Aufgabe wird für das Verfahren mit den im Patentanspruch 1 angegebenen Mitteln, für die Vorrichtung mit den Merkmalen des Patentanspruchs 5 gelöst.

Durch die Erfindung wird die Effizienz der Bedienung eines Programmierhandgerätes mit der Funktionalität der Roboter-Simulationssoftware verbunden. Die Unabhängigkeit von realer Hardware und hoher Funktionalität der Roboter-Simulation wird mit der schnell erlernbaren und effizienten Bedienung von realen Robotern verknüpft.

Durch die dreidimensionale Visualisierung des Roboters und des Objekts wird auch bei komplexen Geometrien ein räumlicher Eindruck erweckt und die Programmierung der Robotersteuerung erleichtert. Die Vorteile der Roboter-Simulation, die leichte Handhabbarkeit und Erlernbarkeit, werden damit dem Anwender konventioneller Programmierung zugänglich gemacht.

Kern der Erfindung ist eine Verknüpfung zwischen der realen Programmierung von Robotern und der Programmierung mittels Roboter-Simulationen. Durch diese Kopplung werden die klassischen Funktionalitäten eines realen Programmierhandgerätes übernommen und mit zusätzlichen Funktionalitäten der Simulation ergänzt.

Eine vorteilhafte Weiterbildung der Erfindung besteht darin, das Programmierhandgerät drahtlos mit dem Robotersteuergerät zu koppeln, in dem das Roboter-Simulationsprogramm enthalten und aktiviert ist. Durch die dreidimensionale Darstellung von (virtuellem) Roboter und (virtuellem) Objekt ist die Programmierung der Bewegungsbahnen und Arbeitsschritte des Roboters unter Einsatz der Kenntnisse zur Programmierung realer Roboter ohne besonderen Schulungsaufwand schnell und sicher möglich.

Die Erfindung ist an Hand eines Ausführungsbeispiels näher erläutert.

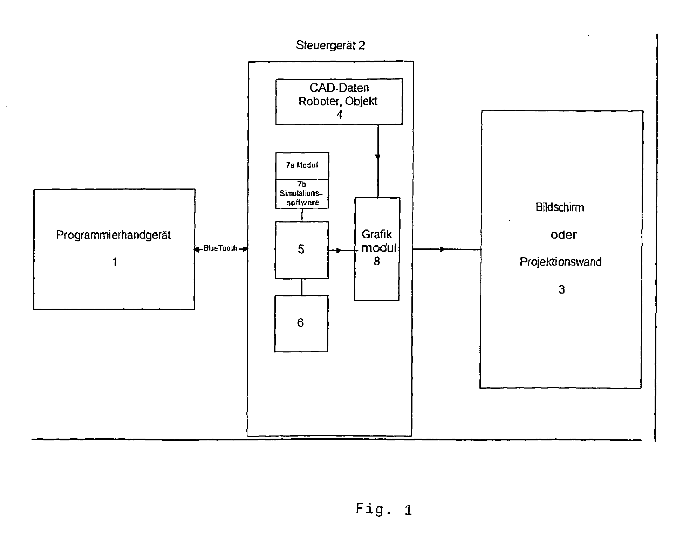

In der einzigen Figur sind die wesentlichen Bestandteile der erfindungsgemäßen Vorrichtung zur virtuellen Programmierung eines Industrieroboters dargestellt. Es sind dies ein Programmierhandgerät 1 , ein Steuergerät 2 und eine Bildfläche 3. Mit dem Programmierhandgerät 1 werden die durch den Industrieroboter (nicht dargestellt und im Rahmen der Erfindung nicht tatsächlich vorhanden) auszuführenden Funktionen durch Aufgabe von Befehlen mittels einer im Programmierhandgerät 1 vorgesehenen Tastatur (nicht dargestellt) ausgewählt. Es sind dies beispielsweise folgende Funktionen:
1. Bewegen des Roboters in Weltkoordinaten oder Relativkoordinaten
2. Steuerung der einzelnen Achsen des Roboters
3. Anfahrpunkte erzeugen
4. Pfadgenerierung
5. Modifizieren der Pfade und Anfahrpunkte
6. Anfahren der Anfahrtspunkte
7. Abfahren der Pfade

Diese Befehle werden drahtlos an das Steuergerät 2 weitergegeben. In diesem befindet sich ein Speicher 4 für die Daten eines durch den Roboter zu behandelnden Objekts, beispielsweise einer Fahrzeugkarosse, ein Speicher 5 für die Daten des Roboters und der Anfahrpunkte, ein Speicher 6 für die Änderungen der Daten des Roboters und die zeitliche Abfolge dieser Änderungen, ein Programmmodul 7a zur Aufbereitung der vom Programmierhandgerät 1 aufgegebenen Befehle für die Simulationssoftware, eine Simulationssoftware 7b zum Umsetzen der vom Programmierhandgerät 1 aufgegebenen Befehle in entsprechende Vorgaben zur Änderung der Daten des Roboters und Anfahrpunkte an den Speicher 5, sowie ein Grafikprogramm 8. Das Grafikprogramm 8 steuert den auf der Bildfläche 3 wiederzugebenden Bildinhalt.

Die mit dem Programmierhandgerät 1 anwählbaren Funktions-Befehle (Bewegung des Roboters etc.) werden zur Simulationssoftware 7b übertragen.

Die Kommunikation mit der Simulationssoftware 7b findet bidirektional statt, d.h. es werden Befehle und Daten im gegenseitigen Wechsel übertragen. Die bidirektionale Kommunikation gewährleistet die Übertragung der vom Programmierhandgerät 1 aufgegebenen Befehle an die Simulationssoftware 7b und überträgt eine voreingestellte Auswahl an Roboterdaten und Objektdaten. Die individuelle Auswahl erfolgt ebenfalls durch das Programmiergerät 1.

Im Steuergerät 2 werden die eingehenden Befehle in entsprechende Vorgaben an den Speicher 5 weitergegeben und damit eine Änderung der Daten des Roboters und der Anfahrpunkte vorgenommen. Die neuen Roboterdaten und Anfahrpunkte werden an das Grafikprogramm 8 weitergegeben und als geänderter Bildinhalt über eine nicht gezeigte Projektionseinrichtung auf der Bildfläche dargestellt. Gleichzeitig werden wie oben beschrieben die Änderungen im Speicher 6 festgehalten.

Als Bildfläche dient vorzugsweise eine Projektionswand. Damit lassen sich gerade komplexe Objekte und grafische Zusammenhänge übersichtlich darstellen.

Auf der Projektionswand werden das jeweilige Objekt und der Industrieroboter abgebildet. Die Darstellung erfolgt räumlich. Hierzu wird einerseits ein projiziertes, stereoskopisches Bild unter Anwendung eines geeigneten Grafikmoduls erzeugt. Anderseits wird durch Verwendung von sog. Shutter-Brillen durch den Benutzer, die im schnellen Wechsel jeweils ein Brillenglas verdunkeln und freigeben, ein räumlicher Effekt der Ansicht für den Benutzer simuliert. Die Synchronisation der Shutter-Brille und des stereoskopen Bild erfolgt durch das Grafikmodul.

Der Benutzer erhält einen räumlichen Eindruck sowohl des Objekts als auch des Roboters und kann diesen über das Programmierhandgerät 1 steuern. Steuern bedeutet dabei nicht nur die Bewegungsbahn des Roboters festzulegen, sondern auch die jeweiligen Arbeitsschritte wie Schweißen, Lackieren usw. mittels geeigneter und ebenfalls im Bild wiedergegebener Vorrichtungen zu bestimmen.

Durch weitere Funktionen, die mit dem Programmierhandgerät 1 auswählbar sind, ist eine verbesserte Bewegung des Roboters in der virtuellen, visualisierten Roboteranlage möglich:
1. Drehen der Ansicht des Objekts und des Roboters in allen Freiheitsgraden
2. Vergrößern der Ansicht
3. Dreidimensionale Ansicht

Schließlich kann auch eine Trackingeinrichtung vorgesehen sein, die die Kopf-Bewegung und -Ausrichtung des Benutzers erfasst und die Ansicht entsprechend selbsttätig verändert. Damit wird es möglich, beispielsweise sich an einen z. B. schwer einsehbaren Bearbeitungsort des Roboters anzunähern und diesen dort besonders genau zu steuern.

Damit wird es möglich, ein Programm zur Steuerung des Roboters zu gewinnen, noch bevor das Objekt vorliegt und mit einem körperlich vorhandenen Roboter zusammenwirkt. Es lassen sich so komplette Fertigungsabläufe studieren und vorprogrammieren noch bevor die Fertigungsanlage errichtet ist.

## Patentansprüche

1. Verfahren zum Programmieren eines Industrieroboters unter Verwendung eines Simulationsprogramms (7b), bei dem
- mittels eines Programmierhandgeräts (1), in dem eine Tastatur vorgesehen ist, Steuerbefehle aufgegeben und an das Simulationsprogramm (7b) übertragen werden und diese Befehle von dem Simulationsprogramm (7b) auf der Basis von Daten des Roboters als Bewegungs- und/oder Bearbeitungsvorgänge des Roboters auf einer Projektionsfläche (3) visualisiert werden,
- ein zu behandelndes Objekt ebenfalls auf der Projektionsfläche dargestellt wird, und
- der Roboter und das Objekt unter Verwendung einer stereoskopischen Projektionseinrichtung auf der Projektionsfläche dreidimensional visualisiert werden.

2. Verfahren nach Anspruch 1, **dadurch gekennzeichnet, dass** das dreidimensionale Bild in seinen optischen Abbildungseigenschaften willkürlich geändert wird.

3. Verfahren nach Anspruch 1 oder 2, **dadurch gekennzeichnet, dass** die Position des Bedieners und ihre Änderung erfasst und daraus eine Anpassung des Blickwinkels und des Bildinhalts hinsichtlich der Perspektive und des Abstands abgeleitet wird.

4. Verfahren nach einem der Ansprüche 1 bis 4, **dadurch gekennzeichnet, dass** die Steuerbefehle drahtlos von dem Programmierhandgerät an ein Steuergerät (2) übertragen werden, in dem das Simulationsprogramm enthalten und aktiviert ist.

5. Vorrichtung zur Durchführung des Verfahrens nach einem der Ansprüche 1 bis 4, umfassend
eine stereoskopische Projektionseinrichtung zur Darstellung des Roboters und des Objekts auf einer Projektionsfläche (3),
ein Simulationsprogramm (7b) zum Erstellen von Bewegungs- und/oder Bearbeitungsvorgänge des Roboters auf der Basis von Daten des Roboters und ein Programmierhandgerät (1), in dem eine Tastatur vorgesehen ist, zum Aufgeben von an das Simulationsprogramm (7b) zu übertragenden Steuerbefehlen.

## Claims

1. A method for programming an industrial robot using a simulation programme (7b), wherein
- control commands are output by means of a handheld programming device (1), in which a keyboard is provided, and transmitted to the simulation programme (7b) and these commands are visualised by the simulation programme (7b) on the basis of robot data as movement and/or machining processes of the robot on a projection surface (3),
- an object to be treated is also shown on the projection surface, and
- the robot and the object are visualised three-dimensionally, using a stereoscopic projection mechanism, on the projection surface.

2. A method according to claim 1, **characterised in that** the three-dimensional image is randomly changed with respect to its optical imaging properties.

3. A method according to claim 1 or 2, **characterised in that** the position of the operator and a change thereof are detected and an adaptation of the viewing angle and the image content with regard to the perspective and distance is derived therefrom.

4. A method according to any one of claims 1 to 4, **characterised in that** the control commands are transmitted wirelessly from the handheld programming device to a control device (2), in which the simulation programme is contained and activated.

5. A device for carrying out the method according to any one of claims 1 to 4, comprising a stereoscopic projection mechanism to show the robot and the object on a projection surface (3), a simulation programme (7b) to set up movement and/or machining processes of the robot on the basis of robot data and a handheld programming device (1), in which a keyboard is provided, to output control commands to be transmitted to the simulation programme (7b).

## Revendications

1. Procédé de programmation d'un robot industriel en utilisant un programme de simulation (7b),
selon lequel
- à l'aide d'un appareil portatif de programmation (1) équipé d'un clavier, on émet des ordres de commande et on les transmet au programme de simulation (7b) et ce programme de simulation (7b) visualise ses ordres sur le fondement des données du robot comme opérations de déplacement et/ou d'usinage du robot sur une surface de projection (3),
- on représente un objet à traiter également sur la surface de projection, et
- on visualise le robot et l'objet en utilisant une installation de projection stéréoscopique, en trois dimensions sur la surface de projection.

2. Procédé selon la revendication 1,
**caractérisé en ce que**
les propriétés de représentation optique de l'image tridimensionnelle, sont modifiées de manière aléatoire.

3. Procédé selon la revendication 1 ou 2,
**caractérisé en ce qu'**
on saisit la position de l'utilisateur et sa variation pour en déduire une adaptation de l'angle de visée et du contenu de l'image du point de vue de la perspective et de la distance.

4. Procédé selon l'une des revendications 1 à 3,
**caractérisé en ce qu'**
on transmet les ordres de commande, par une transmission sans fil entre l'appareil portatif de programmation et un appareil de commande (2) contenant et activant le programme de simulation.

5. Dispositif pour la mise en oeuvre du procédé selon l'une des revendications 1 à 4,
comprenant :
- une installation de projection stéréoscopique pour représenter le robot et l'objet sur une surface de projection (3), un programme de simulation (7b) pour établir une opération de mouvement et/ou de travail du robot sur la base des données du robot, et un appareil portatif de programmation (1) muni d'un clavier pour émettre les ordres de commande à transmettre pour le programme de simulation (7b).
